# EUROPÄISCHE PATENTSCHRIFT

(11) **EP 0 844 166 B1**
(45) Veröffentlichungstag und Bekanntmachung des Hinweises auf die Patenterteilung: **20.02.2002**
(21) Anmeldenummer: 97119642.3
(22) Anmeldetag: 10.11.1997
(51) Int. Cl.: B62D 25/20

(54) **Türschweller für Türöffnungen eines Kraftfahrzeuges**
Side stiffeners for door openings of an automotive vehicle.
Renforts latéraux de l'ouverture d'une porte d'un véhicule automobile.

(30) Priorität: 25.11.1996 DE 19648738
(43) Veröffentlichungstag der Anmeldung: 27.05.1998
(73) Patentinhaber: DaimlerChrysler AG, 70567 Stuttgart (DE)
(72) Erfinder: Möller, Hans-Günther, 71134 Aidlingen (DE); Pfeiffer, Peter, 71034 Böblingen (DE); Reichel, Anton, 71254 Ditzingen (DE)

(56) Entgegenhaltungen:
- FR-A- 2 415 018
- US-A- 2 012 057
- US-A- 2 114 344

## Beschreibung

Die Erfindung betrifft einen Türschweller für Türöffnungen eines Kraftfahrzeuges nach dem Oberbegriff des Patentanspruchs 1.

Es sind Türschweller nach dem Oberbegriff des Anspruch 1 aus DE-U-73 35 731 bekannt, bei denen seitlich außen eine Zierleiste angebracht ist. In dieser Zierleiste befinden sich in Fahrzeuglängsrichtung nach seitlich außen offene Nuten. Die zugeordneten Türen weisen eine Unterkante auf, die mit einer zum Fahrzeuginneren hin gerichtet umgebogenen Kante in eine Nut der Zierleiste eingreift. Zwischen der Unterkante der Fahrzeugtür ergibt sich durch die Längsnut eine parallel zu dem Träger des Schwellers verlaufende Fuge, da die Türunterkante die Längsnut in der Zierleiste in deren Querrichtung nicht vollständig ausfüllt.

Der Erfindung liegt das Problem zugrunde, den Verlauf der Fuge zwischen unterer Türkante und Abdeckung des Schwellers in einer mit Bezug auf das Fahrzeugdesign ästhetisch ansprechenden Weise gestalten zu können. Mit Bezug auf den Schweller sollen verschiedene Gestaltungsmöglichkeiten allein durch in der Form geänderte Abdeckungen bei in der Form unverändert bleibenden Trägern des Schwellers, mit dem die Abdeckungen zu verbinden sind, geschaffen werden.

Gelöst wird dieses Problem bei einem gattungsgemäßen Türschweller eines Kraftfahrzeuges durch eine Ausgestaltung nach den kennzeichnenden Merkmalen des Patentanspruchs 1.

Die Erfindung beruht auf dem Gedanken, verschiedene Gestaltungen des Übergangsbereiches zwischen Türunterkante und darunter liegender Abdeckung ausschließlich durch unterschiedliche Abdeckungsformen erreichen zu können. Der Träger des Schwellers kann dabei bezüglich seines Querschnittsprofils unverändert bleiben, so daß mit einem gleichen Träger eines Schwellers verschiedenartigste Abdeckungsformen mit unterschiedlichen Übergängen zu der jeweiligen Türunterkante möglich sind. Bei Trägern von Schwellern, die in Fahrzeughochachse eine ebene Anlagefläche für die daran zu befestigende Abdeckung besitzen, sind zur Durchführung der erfindungsgemäßen Lehre keine besonderen Maßnahme hinsichtlich der Gestalt des Trägers zu ergreifen.

Es gibt allerdings in der Praxis Querschnittsprofile von Trägern eines Schwellers, die im lotrecht oberen Bereich von außen zum Fahrzeuginneren hin einen stufenförmigen Rücksprung aufweisen, der nach oben von der Schwelleroberkante begrenzt wird. Ein solcher stufenförmiger Rücksprung dient beispielsweise dazu, bei einer entsprechend mit einem Rücksprung ausgebildeten Abdeckung eine die Türunterkante gegenüber der Abdeckung dichtende Dichtung nach außen verdeckt aufnehmen zu können. Werden Träger mit einer solchen Profilform eingesetzt, gibt das kennzeichnende Merkmal des Anspruch 2 hierzu eine vorteilhafte Ausgestaltung an. Der Vorteil besteht dabei darin, daß auch ein Träger mit einem solchen Stufenprofil in gleicher Ausführung einen mehr oder weniger beliebig geneigten Verlauf einer Fuge zwischen einer Türunterkante und der an dem Träger befestigten Abdeckkung ermöglicht. Die Abdekkung ist zweckmäßigerweise im Bereich des Rücksprunges des Trägers an diesem durch beispielsweise eine Verschraubung befestigt.

Bevorzugt liegt die Türkantenabdichtung ebenfalls innerhalb eines gemeinsamen Rücksprunges von Träger und Abdeckung.

Ein Ausführungsbeispiel der Erfindung ist in der Zeichnung dargestellt.

Es zeigen
- Fig. 1: einen unteren Ausschnitt aus einer Seitenansicht eines Kraftfahrzeuges mit einer vorderen und einer hinteren Tür,
- Fig. 2: einen Schnitt nach Linie II-II in Fig. 1 durch einen erfindungsgemäß aufgebauten Schweller.

Bei der Seitenansicht des unteren Teiles eines Kraftfahrzeuges ist unter einer vorderen Tür 1 sowie einer dahinter liegenden angrenzenden hinteren Tür 2 getrennt durch eine geneigt zur Fahrzeuglängsachse bzw. zum Fahruntergrund verlaufende Fuge 3 eine Schweller-Abdeckung 4 zu erkennen.

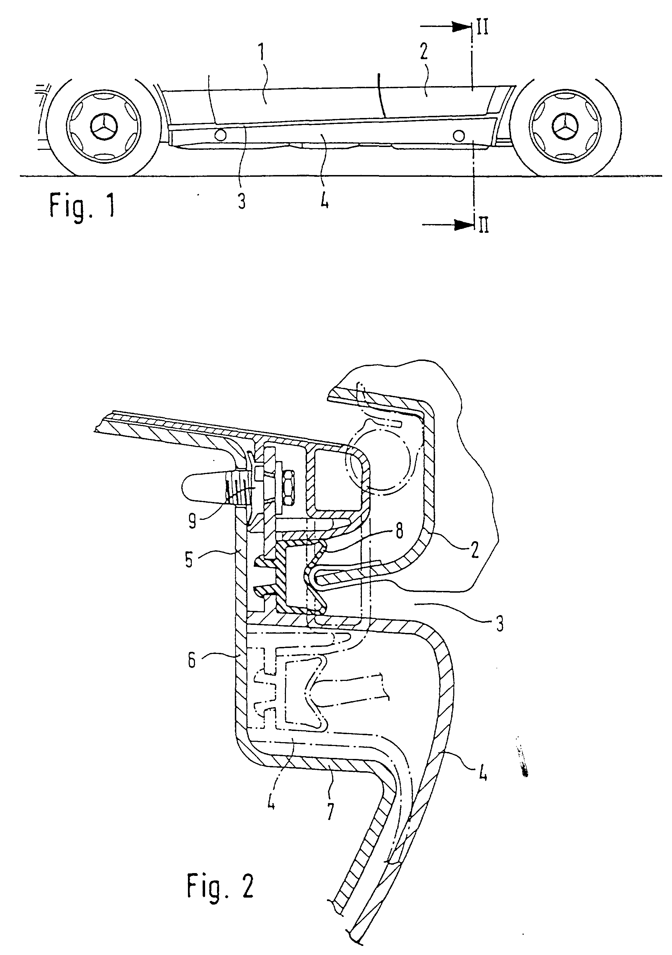

Wie der Schweller im einzelnen aufgebaut ist, zeigt die Querschnittsdarstellung eines solchen Schwellers nach Fig. 2.

Längs der durch die Türen 1 und 2 verdeckten Türöffnung verläuft unten ein oben und nach seitlich außen durch die Abdekkung 4 verkleideter Schweller-Träger 5. Der Träger 5 ist an seiner der Abdeckung 4 zugewandten Seitenfläche gestuft ausgebildet, wobei der Rücksprung in dem oberen der Schweller-Oberkante zugewandten Bereich liegt. Die innerhalb der Stufe etwa parallel zur Fahrzeughochachse liegende Stufenfläche ist mit 6 und die hierzu senkrecht verlaufende untere Stufenfläche ist mit 7 in Fig. 2 bezeichnet.

Die Abdeckung 4 weist eine im Prinzip der seitlich gestuften Ausführung des Trägers 5 angepaßte nach außen weisende Stufenform auf. Innerhalb des Grundes der Stufe der Abdeckung 4 ist eine längs der Fahrzeugachse verlaufende Türdichtung 8 angebracht. Die Abdeckung 4 ist unter anderem im oberen Bereich ihrer Stufe über eine Schraubbefestigung 9 an der Stufenfläche 6 des Trägers 5 fixiert. Die Türdichtung 8 liegt in einer in die Abdeckung 4 eingeformten Nut. An der Türdichtung 8 liegt die Unterkante der geschlossenen Tür 2 dicht an. Zwischen der Unterkante der Tür 2 und der Stufe der Abdeckung 4 liegt die Fuge 3, die den aus Fig. 1 ersichtlichen geneigten Verlauf besitzt.

In Fig. 2 ist die Lage der Türdichtung 8 am vorderen Ende der Öffnung für die Tür 1 strichpunktiert angedeutet.

Ein besonderer Vorteil der erfindungsgemäßen Ausführung besteht darin, durch die in Fahrzeughochachse sich über einen relativ weiten Abstand erstreckende ebene Anlagefläche der Stufenfläche 6 des Trägers 5 unterschiedliche Neigungen für die von außen sichtbare Fuge zwischen den Türen 1 und 2 sowie dem unteren Bereich der Schweller-Abdeckung 4 auf einfache Weise zu ermöglichen.

Ein derart ausgebildeter Träger 5 ermöglicht es darüber hinaus, durch lediglich eine Abänderung der Abdeckung 4 unterschiedlich hohe dichtende Anlageflächen für entsprechend unterschiedlich tiefgelegte Unterkanten der Türen 1 und 2 bereitstellen zu können.

Durch die Verwendung eines Schweller-Trägers 5 mit parallel zu der Schweller-Oberkante in Fahrzeuglängsrichtung verlaufender unterer Stufenfläche 7 können beliebige Trägerlängen durch Aneinandersetzen von Trägerabschnitten gleichen Profils erreicht werden. Hierdurch sind rationelle Trägerverlängerungen für Sonderfahrzeuge möglich.

Selbstverständlich sind erfindungsgemäß auch ungestufte Träger in gleicher vorteilhafter Weise verwendbar. Entscheidend für die erfindungsgemäße Lehre ist lediglich, daß die Form der Abdeckung unabhängig von der Form des Trägers des Schwellers frei wählbar ist. Hierfür ist eine in Fahrzeughochachse möglichst lange Anlageebene des Trägers zur Befestigung der diesen nach außen verkleidenden Abdeckung erforderlich.

## Patentansprüche

1. Türschweller für Türöffnungen eines Kraftfahrzeuges bestehend aus einem Träger (5) als Grundkörper und einer auf diesen zur Fahrzeugaußenseite hin aufgesetzten Abdeckung (4) die bei geschlossenen Türen (1,2) von einer jeweiligen Türunterkante übergriffen wird, wobei zwischen jeweils einer Türunterkante und einer mit Abstand parallel zu der Türunterkante an der Abdeckung (4) vorgesehenen Kante eine Fuge (3) ausgebildet ist,
**dadurch gekennzeichnet,**
**daß** ein in Fahrzeuglängsachse geneigter Verlauf der Fuge (3) vorgesehen und die Größe der Neigung unabhängig von der Form des Trägers (5) ausschließlich durch die Form der Abdeckung (4) und der Unterkante einer jeweiligen Tür (1,2) festgelegt ist.

2. Türschweller nach Anspruch 1,
**dadurch gekennzeichnet, daß**
der Träger (5) des Schwellers an seiner zur Fahrzeugaußenseite weisenden von der Abdeckung überdeckten Fläche in seinem in Fahrzeughochachse oben liegenden Bereich einen stufenförmigen Rücksprung (6,7) zur Aufnahme einer jeweiligen Türunterkante besitzt, und
daß innerhalb eines vorgegebenen Höhenbereiches des Fahrzeuges beliebig hohe Lagen der Fuge (3) bei gleich gestaltetem Träger (5) des Schwellers stets innerhalb eines gleichen Rücksprunges (6,7) zu liegen kommen.

3. Türschweller nach Anspruch 2,
**dadurch gekennzeichnet,**
**daß** die in Fahrzeughochachse verlaufende Rückwand (6) des Rücksprungs des Trägers (5) eben ausgebildet ist und daß die Abdekkung (4) unter anderem an dieser Rückwand (6) befestigt ist.

4. Türschweller nach Anspruch 2 oder 3,
**dadurch gekennzeichnet,**
**daß** in einem innerhalb des Rücksprunges des Trägers (5) liegenden Bereich der Abdeckung eine Dichtung (8) für die Unterkante einer Tür (1,2) angebracht ist.

## Claims

1. Door sill for door openings of a motor vehicle, consisting of a support (5) as a basic body and a cover (4) mounted thereon on the vehicle exterior, across which a respective door bottom edge engages when the doors (1, 2) are closed, a join (3) being formed respectively between a door bottom edge and an edge provided on the cover (4) at a distance from and parallel with the door bottom edge,
**characterised in that**
the join (3) follows an inclined path in the vehicle longitudinal axis and the degree of inclination is determined irrespective of the shape of the support (5) exclusively by the shape of the cover (4) and the bottom edge of a respective door (1, 2).

2. Door sill as claimed in claim 1,
**chacterised in that**
on its face directed towards the vehicle exterior and masked by the cover, the support (5) of the sill has a step-shaped recess (6, 7) in its top region in the vehicle normal axis for receiving a respective door bottom edge and in that within a predetermined height region of the motor vehicle the join (3) may lie at any height for a same design of support (5) for the sill, always within a same recess (6, 7).

3. Door sill as claimed in claim 2,
**characterised in that**
the rear wall (6) of the recess of the support (5) extending in the vehicle normal axis is flat and the cover (4) is secured amongst other things to this rear wall (6).

4. Door sill as claimed in claim 2 or 3,
**characterised in that**
a seal (8) for the bottom edge of a door (1, 2) is mounted in a region of the cover lying inside the recess of the support (5).

## Revendications

1. Seuil de portière pour des ouvertures de portières de véhicules automobiles, constitué par un support (5) en tant que corps de base et par un élément de recouvrement (4) qui est monté sur ce support vers le côté extérieur du véhicule et au-dessus duquel s'engage un chant inférieur respectif de portière, lorsque les portières (1, 2) sont fermées, une fente (3) étant formée entre respectivement un chant inférieur de portière et un chant prévu sur l'élément de recouvrement (4) à distance et parallèlement au chant inférieur de portière, **caractérisé en ce que** la fente (3) est prévue avec une configuration inclinée par rapport à l'axe longitudinal du véhicule et que le degré d'inclinaison est fixé, indépendamment de la forme du support (5), exclusivement par la forme de l'élément de recouvrement (4) et du chant inférieur d'une portière respective (1, 2).

2. Seuil de portière selon la revendication 1, **caractérisé en ce que** le support (5) du seuil de portière possède, au niveau de sa surface dirigée vers le côté extérieur du véhicule et recouverte par l'élément de recouvrement, dans sa zone supérieure, suivant l'axe vertical du véhicule, une partie de forme étagée rentrante (6, 7) servant à recevoir un chant inférieur respectif de portière, et que dans les limites d'une zone prédéterminée en hauteur du véhicule, des positions en hauteur quelconques de la fente (3) viennent se situer en permanence à l'intérieur d'une même partie rentrante (6, 7), pour le support (5) agencé de la même manière du seuil de portière.

3. Seuil de portière selon la revendication 2, **caractérisé en ce que** la paroi arrière (6), qui s'étend suivant l'axe vertical du véhicule, de la partie rentrante du support (5) est agencée avec une forme plane et que l'élément de recouvrement (4) est fixé notamment à cette paroi arrière (6).

4. Seuil de portière selon la revendication 2 ou 3, **caractérisé en ce qu'**une garniture d'étanchéité (8) pour le chant inférieur d'une portière (8) est monté dans une zone de l'élément de recouvrement, qui est située à l'intérieur de la partie rentrante du support (5).
